# EUROPÄISCHE PATENTSCHRIFT

(11) **EP 2 881 608 B1**
(45) Veröffentlichungstag und Bekanntmachung des Hinweises auf die Patenterteilung: **20.03.2019**
(21) Anmeldenummer: 14186617.8
(22) Anmeldetag: 26.09.2014
(51) Int. Cl.: F16D 25/08, F16D 48/02, F16D 48/06, F16D 25/063, F16D 25/06

(54) **Deckelfester Zentralausrücker für eine hydraulische oder pneumatische Kupplungsbetätigungseinrichtung, insbesondere für ein Kraftfahrzeug**
Fixed cover central clutch release for a hydraulic or pneumatic clutch actuating device, in particular for a motor vehicle
Débrayage central à chapeau fixe pour un dispositif d'actionnement d'embrayage hydraulique ou pneumatique, en particulier pour un véhicule automobile

(30) Priorität: 08.11.2013 DE 102013222695
(43) Veröffentlichungstag der Anmeldung: 10.06.2015
(73) Patentinhaber: Schaeffler Technologies AG & Co. KG, 91074 Herzogenaurach (DE)
(72) Erfinder: Wagner, Philippe, 45140 Ormes (FR)

(56) Entgegenhaltungen:
- EP-A2- 2 025 962
- CN-A- 101 476 577
- CN-U- 202 349 022
- DE-A1-102008 057 644

## Beschreibung

Die Erfindung betrifft einen deckelfesten Zentralausrücker für eine hydraulische oder pneumatische Kupplungsbetätigungseinrichtung, insbesondere für ein Kraftfahrzeug, mit einem Zylindergehäuse, welches einen ringförmigen Druckraum umfasst, in dem ein axial beweglicher Kolben gelagert ist, der mit einer Kupplung in einer Wirkverbindung steht, wobei das Zylindergehäuse an einer Kupplungsabdeckung befestigt ist und mit einer, aus einem Target und einer Sensorelektronik bestehenden Sensoreinheit.

Es sind deckelfeste Zentralausrücker bekannt, die als konzentrisch um eine Getriebeeingangswelle ausgebildeten Nehmerzylinder Teil einer hydraulischen Strecke zur Kupplungsbetätigung sind. Der Zentralausrücker ist direkt auf der Getriebeeingangswelle zentriert. Eine Drehdurchführung, welche den sich mit der Kupplung mitdrehenden Zylindergehäuse und die feststehende Getriebeabdeckung, welche auch als Adapter bezeichnet wird, miteinander verbindet, ist schwimmend ausgebildet, da es keine direkte Lagerung zwischen der Getriebeabdeckung und dem Gehäuse des deckelfesten Zentralausrückers gibt.

In der Druckschrift DE 10 2008 057 644 A1 ist ein getriebefester Nehmerzylinder offenbart, welcher einen in das Nehmerzylindergehäuse integrierten Sensor aufweist, wobei der Sensor eine Position eines Targets, welches mit einem Ausrücklager verbunden ist, erfassen kann.

Es sind weiterhin Nehmerzylinder bekannt, bei welchen der Ausrückweg des Kolbens über Sensoren bestimmt wird, die getriebefest am Adapter verblendet sind. Bei diesen Sensoren wird als Target ein Magnet verwendet. Der Abstand zwischen Target und Sensor kann relativ groß sein, wobei der Sensor am Außendurchmesser des Nehmerzylinders angeordnet ist. Beim Einsatz solcher Sensoren an, mit der Kupplung sich drehenden Zentralausrückern würde sich das Target mit der Kupplung drehen, was aber dazu führt, dass das Sensorsignal durch den Sensor nicht messbar ist.

Der Erfindung liegt somit die Aufgabe zugrunde, einen deckelfesten Zentralausrücker mit einer Sensoreinheit anzugeben, bei welchem die Sensoreinheit trotz sich mit der Kupplung drehenden Zentralausrücker ein zuverlässiges Sensorsignal ausgibt.

Erfindungsgemäß wird die Aufgabe dadurch gelöst, dass das Target an dem sich mit der Kupplung drehenden Kolben befestigt ist, während die Sensorelektronik an einem, eine Fluidzuführung aufweisenden, nicht drehenden Adaptergehäuse fest positioniert ist. Durch die Befestigung des Targets an dem Kolben wird zuverlässig die Position des Kolbens in dem Zentralausrücker gegenüber der feststehenden Sensoreinheit detektiert. Somit ist eine Wegmessung auch an Nehmerzylindern möglich, die als deckelfester Zentralausrücker ausgebildet sind.

Vorteilhafterweise besteht das, den Kolben ringförmig umschließende Target aus einem Metall. Das aus Metall bestehende Target hat den Vorteil, dass es nicht magnetisch ist und sich deshalb bezogen auf die Sensorelektronik mitdrehen kann, ohne einen negativen Einfluss auf die Sensorelektronik auszuüben. Durch die ringförmige Ausgestaltung des Targets nimmt die Sensoreinheit immer eine Wegänderung des ringförmigen Targets wahr, egal in welchem Drehwinkel der Kolben zur Induktionsspule steht.

In einer Ausgestaltung umfasst die Sensorelektronik eine Induktionsspule, welche die Position des Targets sensiert, und eine Sensorauswerteeinheit, wobei die Induktionsspule gegenüberliegend zum Target an dem Adaptergehäuse angeordnet ist, während die Sensorauswerteeinheit außen am Adaptergehäuse positioniert ist. Die in das Innere des Zentralausrückers am Adaptergehäuse verbaute Induktionsspule erzeugt ein Magnetfeld, in welchem sich das ringförmige Target bewegt.

In einer Variante sind die Induktionsspule und die Sensorauswerteeinheit über ein Kabel miteinander verbunden. Dieses Kabel ist auch sehr platzsparend und kann entlang von Nuten des Zentralausrückers von innen nach außen geführt werden.

In einer Alternative ist die Sensorauswerteeinheit auf einer abgewinkelten zweiten Platine ausgebildet, welche direkt an eine, die Induktionsspule tragende ersten Platine angrenzt, wobei das die Sensorauswerteeinheit mit der Induktionsspule verbindende Kabel integrierter Bestandteil der ersten Platine ist. Somit kann auf ein zusätzliches Element in Form des frei beweglichen Kabels verzichtet werden, was die Montage des Zentralausrückers vereinfacht. Durch die Aufteilung der Platine der Sensorelektronik in zwei Platinen wird die Breite der Platine reduziert, weshalb der Spalt zwischen Platine und Zylindergehäuse verringert werden kann und der Bauraum des Zentralausrückers nicht vergrößert werden muss.

Vorteilhafterweise besteht das Zylindergehäuse aus einem Kunststoff. Bei der Verwendung von induktiven Sensoren darf kein metallisches Bauteil zwischen dem Target und dem Sensor angeordnet sein, da sich sonst das Sensorsignal nachteilig verändert. Darüber hinaus besitzt der innere Durchmesser des Zylindergehäuses einen kleineren Durchmesser, wobei Druck von außen auf das Zylindergehäuse wirkt. Infolge der Ausgestaltung des Zylindergehäuses aus Kunststoff hält dieses Zylindergehäuse bei Kompression sehr gut und nimmt den, von außen auf das Zylindergehäuse einwirkenden Druck auf.

In einer Ausgestaltung trägt ein der Kupplung zugewandtes Ende des Zylindergehäuses und/oder ein der Kupplung zugewandtes Ende des Adaptergehäuses eine Labyrinthabdichtung. Mittels einer solchen Labyrinthabdichtung wird eine Verschmutzung des Inneren des Zentralausrückers unterbunden, weshalb auch die Sensoreinheit zuverlässig vor Verunreinigungen geschützt ist.

In einer Variante ist auf dem Adapter eine Zentrierhülse montiert, durch die das Kabel oder die das Kabel aufnehmende erste Platine geführt sind, wobei auf die Zentrierhülse ein Wälzlager gepresst ist. Diese Zentrierhülse dient dazu, das aus Kunststoff bestehende Zylindergehäuse, welches weich fließt, zu stabilisieren. Gleichzeitig dient die Zentrierhülse als Lauffläche für die zwei radialen, als schwimmende Lager dienenden Drehdurchführungen, die auf dem Adaptergehäuse montiert sind.

Eine weitere Ausgestaltung der Erfindung betrifft einen deckelfesten Zentralausrücker, bei welchem das Target als magnetisches Bauteil ausgebildet ist, welches über ein, ein Lager umfassendes Befestigungsteil an dem Kolben befestigt ist und die Sensorelektronik gegenüber dem Target an dem Adaptergehäuse befestigt ist. Das als magnetisches Bauteil ausgebildete Target liegt somit nicht direkt auf dem Kolben auf, sondern ist über ein Bauteil mit dem Kolben verbunden. Da dieses Befestigungsteil ein Lager umfasst, wird die Drehbewegung des Kolbens gegenüber dem Target ausgeglichen, so dass das Target unabhängig von der Drehbewegung des Kolbens immer gegenüber der feststehenden Sensoreinheit positioniert ist. Somit lassen sich auch LVDT- oder Melexis-Sensoren in einem solchen deckelfesten Zentralausrücker als Wegmesseinrichtungen verwendet.

In einer Ausführungsform besteht zwischen dem, das Lager umfassenden Befestigungsteil und dem Adapter eine Federverbindung. Mittels einer solchen Federverbindung, welche vorzugsweise als Zugfeder ausgebildet ist, wird das zusätzliche Befestigungsteil gegen den Kolben gezogen, um somit die Position des Targets gegenüber der Sensoreinheit zu stabilisieren.

Die Erfindung lässt zahlreiche Ausführungsformen zu. Zwei davon sollen anhand der in der Zeichnung dargestellten Figuren näher erläutert werden.

Es zeigen:
- Fig. 1: ein erstes Ausführungsbeispiel des erfindungsgemäßen deckelfesten Zentralausrückers,
- Fig. 2: ein weiteres Ausführungsbeispiel des erfindungsgemäßen deckelfesten Zentralausrückers,
- Fig. 3: ein weiteres Ausführungsbeispiel des erfindungsgemäßen deckelfesten Zentralausrückers.

Gleiche Merkmale sind mit gleichen Bezugszeichen gekennzeichnet.

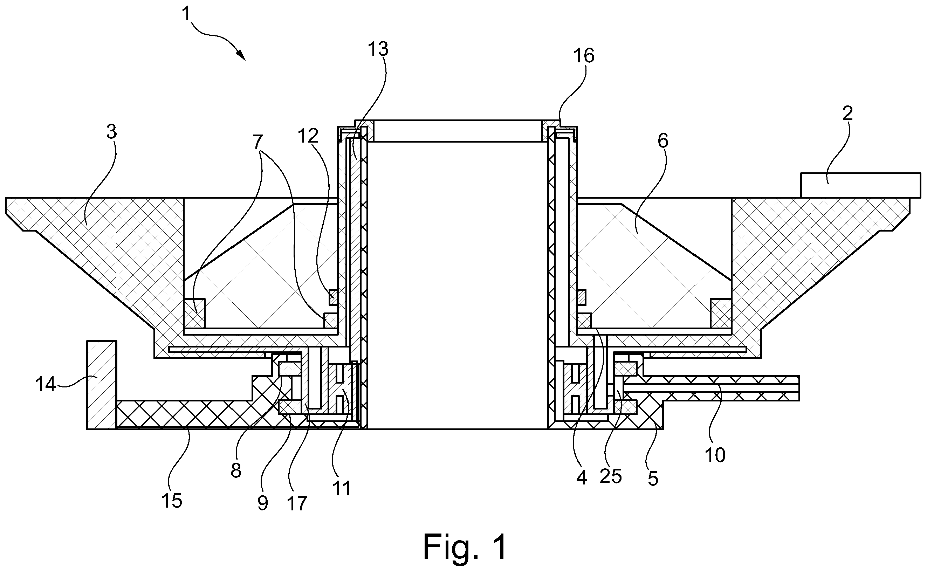

Figur 1 zeigt ein erstes Ausführungsbeispiel eines erfindungsgemäßen deckelfesten Zentralausrückers 1, welcher als Nehmerzylinder in eine hydraulische oder pneumatische Kupplungsbetätigungseinrichtung eines Kraftfahrzeuges einsetzbar ist. Der Zentralausrücker 1 ist an einer Kupplungsabdeckung 2 befestigt. Diese Fixierung kann durch einen Formschluss oder über ein zusätzliches Bauelement, wie beispielsweise einer Schraube oder einem Niet, erfolgen. Der Zentralausrücker 1 besteht aus einem Zylindergehäuse 3, das aus einem Kunststoff hergestellt ist. Das Zylindergehäuse 3 bildet innenliegend einen ringförmigen Druckraum 4 aus. Das Zylindergehäuse 3 weist aufgrund des ringförmig ausgebildeten Druckraumes 4 einen Hohlraum auf, in welchem ein Adaptergehäuse 5 eingreift, das eine nicht weiter dargestellte Getriebeeingangswelle aufnimmt. Das Adaptergehäuse 5 ist dabei die Getriebeabdeckung.

Innerhalb des Druckraumes 4 ist ein Kolben 6 axial beweglich gelagert, welcher gegenüber dem Druckraum 4 mit Druckkolbenabdichtungen 7 abgedichtet ist. Der Kolben 6 steht in einer Druckverbindung zu einer nicht weiter dargestellten Kupplung. An dem Zylindergehäuse 3 sind radial zwei Drehdurchführungen 8, 9 gelagert, welche das feststehende Adaptergehäuse 5 mit dem sich mit dem Kupplungsdeckel 2 drehenden Zylindergehäuse 3 verbinden. Die Drehdurchführungen 8, 9 laufen dabei auf einem, an dem Adaptergehäuse 5 befestigten Wälzlager 11.

Das Adaptergehäuse 5 weist eine Medienzufuhr 10 für ein hydraulisches oder pneumatisches Medium auf, welche über die Drehdurchführungen 8, 9 und über eine, im Zylindergehäuse 3 ausgebildete Bohrung 25, die mit dem Druckraum 4 in Verbindung steht.

Radial an dem Kolben 6, dem Adaptergehäuse 5 zugewandt, ist ein ringförmiges, metallisches Target 12 in Form eines Blechstreifens angeordnet. Gegenüberliegend zu diesem Target 12 ist eine erste Platine 13 ausgebildet, welche eine nicht weiter dargestellte Induktionsspule zum Aufbau eines Magnetfeldes trägt. Da das Target 12 ringförmig ausgebildet ist, kann es einfach die Drehbewegung des Kolbens 6 mitmachen, welche dieser in Abhängigkeit von der Kupplungsposition ausführt. Trotzdem bewegt sich das Target 12 in Abhängigkeit von der Position des Kolbens 6 linear entlang der ersten Platine 13 innerhalb des, von der Induktionsspule aufgespannten Magnetfeldes. Eine ebenfalls nicht weiter dargestellte Sensorauswerteeinheit ist auf einer zweiten Platine 14 außen am Adaptergehäuse 5 angeordnet und über ein Kabel 15 mit der Induktionsspule, die auf der ersten Platine 13 ausgebildet ist, verbunden. Führt der Kolben 6 eine lineare Bewegung zur Veränderung der Stellung der Kupplung aus, so ändert sich die Position des ringförmigen Targets 12 in dem, von der Induktionsspule aufgespannten Magnetfeld, wobei sich das von der Sensorauswerteeinheit auf der zweiten Platine 14 ausgegebene Sensorsignal ändert. Der Abstand zwischen der ersten Platine 13 und dem Target 12 beträgt dabei nur wenige Millimeter.

Auf einem oberen Ende des Zylindergehäuses 3 und einem oberen Ende des Adaptergehäuses 5 erstreckt sich eine Labyrinthabdichtung 16, welche dem Schutz der im Inneren des Zentralausrückers 1 liegenden Sensoreinheit 12, 13 dient. Darüber hinaus ist auf dem Adaptergehäuse 5 eine Zentrierhülse 17 montiert, durch welche das Kabel 15 hindurch geht. Auf der Zentrierhülse 17 ist das Wälzlager 11 aufgepresst, wodurch das Adaptergehäuse 5 mit dem Zylindergehäuse 3 zentriert wird. Da das Zylindergehäuse 3 aus einem Kunststoff besteht, kann die aus Stahl bestehende Zentrierhülse 17 in dem Zylindergehäuse 3 eingespritzt werden. Gleichzeitig dient diese Zentrierhülse 17 als Lauffläche für die Drehdurchführungen 8, 9, die auf dem Adaptergehäuse 5 montiert sind.

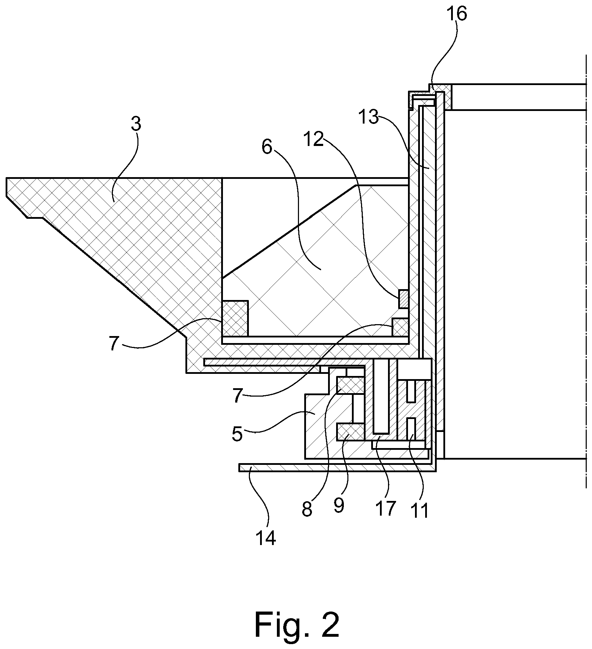

Ein zweites Ausführungsbeispiel des deckelfesten Zentralausrückers 1 ist in Figur 2 dargestellt, bei welchem auf ein frei verlegtes Kabel 15 verzichtet wird. Die beiden Platinen 13, 14 sind dabei miteinander verbunden, wobei die, die Sensorauswerteeinheit tragende zweite Platine 14 winkelähnlich, vorzugsweise rechtwinklig, ausgebildet ist. Auf dem die erste Platine 13 verlängernden zweiten Schenkel der zweiten Platinen 14 ist eine elektrische Verbindung als Ersatz für das Kabel als integraler Bestandteil der zweiten Platine 14 ausgebildet, während auf dem zweiten Schenkel der zweiten Platine die Sensorauswerteeinheit positioniert ist, die auch in diesem Fall außen an dem Adaptergehäuse 5 anliegt. Dadurch, dass die erste Platine nur die Induktionsspule trägt, ist diese so klein dimensioniert, dass diese trotz einer ebenen Ausbildung sich gut an die Zylinderform des Zylindergehäuses anpasst, ohne mehr Platz zu beanspruchen.

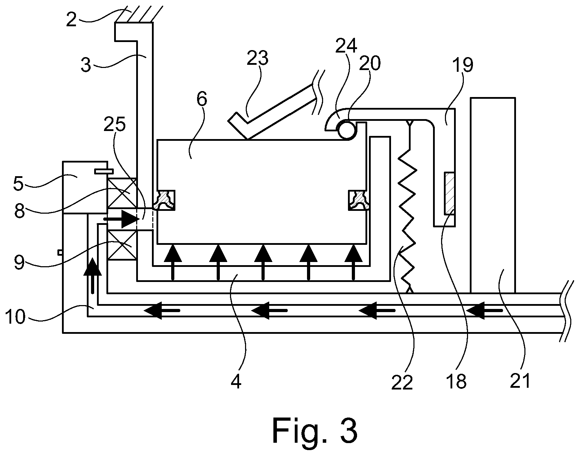

Eine weitere Ausführungsform der Erfindung ist aus Figur 3 ersichtlich. Dabei wird kein induktiver Sensor, sondern ein LVDT-Sensor oder ein Melexis-Sensor verwendet. Bei einem solchen Sensor ist das Target 18 als Magnet ausgebildet. Das magnetische Target 18 ist dabei an einem zusätzlichen Befestigungsteil 19 befestigt, welches über ein Lager 20 mit dem Kolben 6 verbunden ist. Das Lager 20 kann beispielsweise als Kugellager ausgebildet sein, weshalb es die Drehbewegung des Kolbens 6 gegenüber dem Befestigungsteil 19 ausgleicht. Dadurch wird eine feste Position des magnetischen Targets 18 gegenüber einer Sensoreinheit 21 realisiert. Die Sensoreinheit 21 ist fest außen an dem Adaptergehäuse 5, vorzugsweise an dem Teil des Adaptergehäuses 5, in welchem die Medienzufuhr 10 ausgebildet ist, vorzugsweise senkrecht zu dieser angeordnet. Um das Befestigungsteil 19, welches das magnetische Target 18 trägt, in seiner Position zu halten, ist eine Zugfeder 22 zwischen dem Befestigungsteil 19 und dem Adaptergehäuse 5 vorgesehen. Diese Zugfeder 22 zieht das vorzugsweise aus Blech bestehende Befestigungsteil 19 gegen den Kolben 6 und stabilisiert so die Position des Targets 18.

Das aus Blech bestehende Befestigungsteil 19 ist vorzugsweise rechtwinklig ausgebildet, wobei der eine Schenkel des Befestigungsteils 19 das Target 18 trägt, wobei sich dieser Schenkel parallel zu der aktiven Fläche des Sensors 21 erstreckt. Der zweite Schenkel, welcher ebenfalls eben ausgebildet ist, umfasst mit einer Abwinklung 24 das Lager 17. Zur Andeutung der Kupplung ist eine, an dem Kolben 6 angreifende Tellerfeder 23 dargestellt.

Das Zylindergehäuse 3 ist auch in dieser Ausführungsform an dem Kupplungsdeckel 2 fixiert. Das Zylindergehäuse 3 weist die Bohrung 25 auf, welche mit der Medienzufuhr 10 des Adaptergehäuses 5 über die Drehdurchführungen 8, 9 in Überdeckung gebracht wird, und so den Eintritt des Fluides in den Druckraum 4 zur Betätigung des Kolbens 6 ermöglicht.

### Bezugszeichenliste

- 1: deckelfester Zentralausrücker
- 2: Kupplungsabdeckung
- 3: Zylindergehäuse
- 4: Druckraum
- 5: Adaptergehäuse
- 6: Kolben
- 7: Druckkolbenabdichtung
- 8: Drehdurchführung
- 9: Drehdurchführung
- 10: Medienzufuhr
- 11: Wälzlager
- 12: Metallisches Target
- 13: Erste Platine
- 14: Zweite Platine
- 15: Kabel
- 16: Labyrinthabdichtung
- 17: Zentrierhülse
- 18: Magnetisches Target
- 19: Befestigungsteil
- 20: Lager
- 21: Sensoreinheit
- 22: Zugfeder
- 23: Tellerfeder
- 24: Abwinklung
- 25: Bohrung

## Patentansprüche

1. Deckelfester Zentralausrücker für eine hydraulische oder pneumatische Kupplungsbetätigungseinrichtung, insbesondere für ein Kraftfahrzeug, mit einem Zylindergehäuse (3), welches einen ringförmigen Druckraum (4) umfasst, in dem ein axial beweglicher Kolben (6) gelagert ist, der mit einer Kupplung in einer Wirkverbindung steht, wobei das Zylindergehäuse (3) an einer Kupplungsabdeckung (2) befestigt ist, und mit einer, aus einem Target (12, 18) und einer Sensorelektronik (13, 14; 21) bestehenden Sensoreinheit, **dadurch gekennzeichnet, dass** das Target (12, 18) an dem sich mit der Kupplung drehenden Kolben (6) befestigt ist, während die Sensorelektronik (13, 14; 21) an einem, eine Fluidzuführung aufweisenden, nicht drehenden Adaptergehäuse (5) fest positioniert ist.

2. Zentralausrücker nach Anspruch 1, **dadurch gekennzeichnet, dass** das, den Kolben (6) ringförmig umschließende Target (12) aus einem Metall besteht.

3. Zentralausrücker nach Anspruch 2, **dadurch gekennzeichnet, dass** die Sensorelektronik (13, 14) eine Induktionsspule, welche die Position des Targets (12) sensiert, und eine Sensorauswerteeinheit umfasst, wobei die Induktionsspule gegenüberliegend zum Target (12) innen an dem Adaptergehäuse (5) angeordnet ist, während die Sensorauswerteeinheit außen am Adaptergehäuse (5) positioniert ist.

4. Zentralausrücker nach Anspruch 3, **dadurch gekennzeichnet, dass** die Induktionsspule und die Sensorauswerteeinheit über ein Kabel (15) miteinander verbunden sind.

5. Zentralausrücker nach Anspruch 4, **dadurch gekennzeichnet, dass** die Sensorauswerteeinheit auf einer abgewinkelten zweiten Platine (14) ausgebildet ist, welche direkt an eine, die Induktionsspule tragende ersten Platine (13) angrenzt, wobei das die Sensorauswerteeinheit mit der Induktionsspule verbindende Kabel (15) integrierter Bestandteil der ersten Platine (14) ist.

6. Zentralausrücker nach mindestens einem der vorhergehenden Ansprüche, **dadurch gekennzeichnet, dass** das Zylindergehäuse (3) aus einem Kunststoff besteht.

7. Zentralausrücker nach mindestens einem der vorhergehenden Ansprüche, **dadurch gekennzeichnet, dass** ein, der Kupplung zugewandtes Ende des Zylindergehäuses (3) und/oder ein der Kupplung zugewandtes Ende des Adaptergehäuses (5) eine Labyrinthabdichtung (16) tragen.

8. Zentralausrücker nach mindestens einem der vorhergehenden Ansprüche 4 - 7, **dadurch gekennzeichnet, dass** auf dem Adaptergehäuse (5) eine Zentrierhülse (17) montiert ist, durch die das Kabel (15) oder die das Kabel aufnehmende zweite Platine (14) geführt sind, wobei auf die Zentrierhülse (17) ein Wälzlager (11) gepresst ist.

9. Zentralausrücker nach Anspruch 1, **dadurch gekennzeichnet, dass** das Target (18) als magnetisches Bauteil ausgebildet ist, welches über ein, ein Lager (20) umfassendes Befestigungsteil (19) an dem Kolben (6) befestigt ist und die Sensorelektronik (21) gegenüberliegend zum Target (18) an dem Adaptergehäuse (5) befestigt ist.

10. Zentralausrücker nach Anspruch 9, **dadurch gekennzeichnet, dass** zwischen dem, das Lager (20) umfassenden Befestigungsteil (19) und dem Adaptergehäuse (5) eine Federverbindung (22) besteht.

## Claims

1. Fixed cover central clutch release for a hydraulic or pneumatic clutch actuating installation, in particular for a motor vehicle, having a cylinder housing (3) which comprises an annular pressure chamber (4) in which an axially movable piston (6) which is operatively connected to a clutch is mounted, wherein the cylinder housing (3) is fastened to a clutch cover (2), and having a sensor unit which is composed of a target (12, 18) and a sensor electronics system (13, 14; 21), **characterized in that** the target (12, 18) is fastened to the piston (6) that rotates conjointly with the clutch, while the sensor electronics system (13, 14; 21) is fixedly positioned on a non-rotating adapter housing (5) that has a fluid infeed.

2. Central clutch release according to Claim 1, **characterized in that** the target (12) that encircles the piston (6) in an annular manner is composed of a metal.

3. Central clutch release according to Claim 2, **characterized in that** the sensor electronics system (13, 14) comprises an induction coil which senses the position of the target (12) and a sensor evaluation unit, wherein the induction coil is disposed on the inside of the adapter housing (5) so as to be opposite the target (12), while the sensor evaluation unit is positioned on the outside of the adapter housing (5).

4. Central clutch release according to Claim 3, **characterized in that** the induction coil and the sensor evaluation unit are interconnected by way of a cable (15).

5. Central clutch release according to Claim 4, **characterized in that** the sensor evaluation unit is configured on an angled second circuit board (14) which is directly contiguous to a first circuit board (13) that supports the induction coil, wherein the cable (15) that connects the sensor evaluation unit to the induction coil is an integral component part of the first circuit board (14).

6. Central clutch release according to at least one of the preceding claims, **characterized in that** the cylinder housing (3) is composed of a plastics material.

7. Central clutch release according to at least one of the preceding claims, **characterized in that** an end of the cylinder housing (3) that faces the clutch, and/or an end of the adapter housing (5) that faces the clutch, support/s a labyrinth seal (16).

8. Central clutch release according to at least one of preceding Claims 4 to 7, **characterized in that** a centring sleeve (17) is assembled on the adapter housing (5), the cable (15) or the second circuit board (14) receiving the cable being guided through said centring sleeve (17), wherein a roller bearing (11) is press-fitted onto the centring sleeve (17).

9. Central clutch release according to Claim 1, **characterized in that** the target (18) is configured as a magnetic component which is fastened to the piston (6) by way of a fastening part (19) that comprises a bearing (20), and the sensor electronics system (21) is fastened to the adapter housing (5) so as to be opposite the target (18).

10. Central clutch release according to Claim 9, **characterized in that** a spring connection (22) exists between the fastening part (19) that comprises the bearing (20) and the adapter housing (5) .

## Revendications

1. Dispositif de débrayage central, fixé à un couvercle, destiné à un dispositif d'actionnement d'embrayage hydraulique ou pneumatique, en particulier à un véhicule automobile, et comprenant un carter de cylindre (3) qui comprend une chambre de pression annulaire (4) dans laquelle est monté un piston (6) à déplacement axial qui est relié fonctionnellement à un embrayage, le carter de cylindre (3) étant fixé à un couvercle d'embrayage (2), et une unité de capteur comprenant une cible (12, 18) et une électronique de capteur (13, 14 ; 21), **caractérisé en ce que** la cible (12, 18) est fixée au piston (6) tournant conjointement avec l'embrayage tandis que l'électronique de capteur (13, 14 ; 21) est positionnée de manière fixe sur un boîtier d'adaptateur non rotatif (5) comprenant une alimentation en fluide.

2. Dispositif de débrayage selon la revendication 1, **caractérisé en ce que** la cible (12), entourant annulairement le piston (6), est en métal.

3. Dispositif de débrayage selon la revendication 2, **caractérisé en ce que** l'électronique de capteur (13, 14) comprend une bobine d'induction, qui détecte la position de la cible (12), et une unité d'évaluation de capteur, la bobine d'induction étant disposée à l'intérieur sur le boîtier d'adaptateur (5) à l'opposé de la cible (12), tandis que l'unité d'évaluation de capteur est positionnée à l'extérieur sur le boîtier d'adaptateur (5).

4. Dispositif de débrayage selon la revendication 3, **caractérisé en ce que** la bobine d'induction et l'unité d'évaluation de capteur sont reliées l'une à l'autre par un câble (15).

5. Dispositif de débrayage selon la revendication 4, **caractérisé en ce que** l'unité d'évaluation de capteur est formée sur une deuxième carte (14) pliée angulairement qui est directement adjacente à une première carte (13) supportant la bobine d'induction, le câble (15) reliant l'unité d'évaluation de capteur à la bobine d'induction faisant partie intégrante de la première carte (14).

6. Dispositif de débrayage selon l'une au moins des revendications précédentes, **caractérisé en ce que** le carter de cylindre (3) est en matière plastique.

7. Dispositif de débrayage selon l'une au moins des revendications précédentes, **caractérisé en ce qu'**une extrémité, dirigée vers l'embrayage, du carter de cylindre (3) et/ou une extrémité, dirigée vers l'embrayage, du boîtier d'adaptateur (5) portent un joint d'étanchéité labyrinthique (16).

8. Dispositif de débrayage selon l'une au moins des revendications précédentes 4 à 7, **caractérisé en ce qu'**un manchon de centrage (17) est monté sur le boîtier d'adaptateur (5), le manchon de centrage étant traversé par le câble (15) ou la deuxième carte (14) recevant le câble, un palier à roulement (11) étant pressé sur le manchon de centrage (1-7).

9. Dispositif de débrayage selon la revendication 1, **caractérisé en ce que** la cible (18) est conçue sous la forme d'un composant magnétique qui est fixé au piston (6) par le biais d'un élément de fixation (19) comprenant un palier (20) et l'électronique de capteur (21) est fixée au boîtier d'adaptateur (5) à l'opposé de la cible (18).

10. Dispositif de débrayage selon la revendication 9, **caractérisé en ce qu'**une liaison à ressort (22) est prévue entre l'élément de fixation (19), comprenant le palier (20), et le boîtier d'adaptateur (5).
